(19) Europäisches Patentamt
European Patent Office
Office européen des brevets

(11) **EP 4 407 557 B1**

(12) **EUROPEAN PATENT SPECIFICATION**

(45) Date of publication and mention
of the grant of the patent:
**11.02.2026 Bulletin 2026/07**

(21) Application number: **22880127.0**

(22) Date of filing: **23.09.2022**

(51) International Patent Classification (IPC):
**G06T 7/269** (2017.01)   **H04N 25/47** (2023.01)

(52) Cooperative Patent Classification (CPC):
**G06T 7/269;** G06T 2207/10016; G06T 2207/20084

(86) International application number:
**PCT/CN2022/121050**

(87) International publication number:
**WO 2023/061187 (20.04.2023 Gazette 2023/16)**

(54) **OPTICAL FLOW ESTIMATION METHOD AND DEVICE**

VERFAHREN UND VORRICHTUNG ZUR OPTISCHEN FLUSSSCHÄTZUNG

PROCÉDÉ ET DISPOSITIF D'ESTIMATION DE FLUX OPTIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.10.2021 CN 202111199513**

(43) Date of publication of application:
**31.07.2024 Bulletin 2024/31**

(73) Proprietor: **Huawei Technologies Co., Ltd.
Shenzhen, Guangdong 518129 (CN)**

(72) Inventors:
• **WANG, Yaoyuan**
**Shenzhen, Guangdong 518129 (CN)**
• **ZHANG, Ziyang**
**Shenzhen, Guangdong 518129 (CN)**
• **YANG, Chen**
**Shenzhen, Guangdong 518129 (CN)**
• **WANG, Ying**
**Shenzhen, Guangdong 518129 (CN)**

(74) Representative: **Gill Jennings & Every LLP
The Broadgate Tower
20 Primrose Street
London EC2A 2ES (GB)**

(56) References cited:
CN-A- 109 922 372    CN-A- 110 390 685
CN-A- 111 402 292    CN-A- 111 696 035
US-A1- 2015 262 380    US-A1- 2020 265 590

• TULYAKOV STEPAN ET AL: "Time Lens: Event-based Video Frame Interpolation", 2021 IEEE/CVF CONFERENCE ON COMPUTER VISION AND PATTERN RECOGNITION (CVPR), IEEE, 20 June 2021 (2021-06-20), pages 16150 - 16159, XP034009608, DOI: 10.1109/CVPR46437.2021.01589
• PAIKIN GENADY ET AL: "EFI-Net: Video Frame Interpolation from Fusion of Events and Frames", 2021 IEEE/CVF CONFERENCE ON COMPUTER VISION AND PATTERN RECOGNITION WORKSHOPS (CVPRW), IEEE, 19 June 2021 (2021-06-19), pages 1291 - 1301, XP033967828, DOI: 10.1109/CVPRW53098.2021.00142
• LIU CONG ET AL: "Optical Flow Estimation through Fusion Network based on Self-supervised Deep Learning", 2021 INTERNATIONAL JOINT CONFERENCE ON NEURAL NETWORKS (IJCNN), IEEE, 18 July 2021 (2021-07-18), pages 1 - 8, XP033975272, DOI: 10.1109/IJCNN52387.2021.9534106

EP 4 407 557 B1

**Description**

**TECHNICAL FIELD**

This application relates to the field of computer vision, and in particular, to an optical flow estimation method and apparatus.

**BACKGROUND**

In an optical flow (optical flow) method, a correspondence between a previous frame and a current frame is found based on a change of a pixel in an image sequence in time domain and correlation between adjacent frames, to calculate motion information of an object between the adjacent frames.

A conventional optical flow estimation method can estimate only optical flows between a first image frame and a second image frame (including an optical flow from the first image frame to the second image frame and an optical flow from the second image frame to the first image frame). The first image frame and the second image frame are two adjacent image frames. However, optical flows from the two image frames to any moment between the two image frames (including an optical flow from the first image frame to the any moment and an optical flow from the second image frame to the any moment) can be evenly allocated only through a linear motion assumption and based on a time length as a weight.

Because linear motion is an assumed case, and is greatly different from an actual case, the accuracy is low when the optical flows from the two adjacent image frames to the any moment between the two adjacent image frames are estimated by using a conventional optical flow calculation method.

CN109922372A describes a video data processing method and apparatus to obtain a video data stream with high frame rate. US2020/265590A1 describes a method for prediction of an indication of motion using input from an event-based camera. TULYAKOV STEPHAN ET AL: "Time Lens: Event-based Video Frame Interpolation" 2021 IEEE/CVF conference on Computer Vision and Pattern Recognition (CVPR) describes a method that leverages synthesis-based and flow-based optical flow estimation methods. PAIKIN GENADY ET AL: "EFI-Net: Video Frame Interpolation from Fusion of Events and Frames" 2021 IEEE/CVF conference on Computer Vision and Pattern Recognition Workshops (CVPRW) describes a method for performing video frame interpolation by fusion of data from a conventional frame camera and an event camera.

**SUMMARY**

The scope of the invention is set out in the appended claims. This application provides an optical flow estimation method and apparatus, to improve accuracy of estimating optical flows from two adjacent image frames to any moment between the two adjacent image frames.

According to a first aspect, this application provides an optical estimation method. The method may include: obtaining a first image frame and a second image frame, where the first image frame and the second image frame are any two adjacent image frames in an image sequence, and the image sequence is obtained by photographing a target scene; obtaining a first event frame, where the first event frame is used to describe a luminance change of the target scene within a time period from the first image frame to the second image frame; and determining a target optical flow based on the first image frame, the second image frame, and the first event frame, where the target optical flow is an optical flow from the first image frame to a target moment, and the target moment is any moment between the first image frame and the second image frame.

In a possible implementation, the method may be used in an optical flow estimation system. The optical flow estimation system may include a pixel sensor, an event-based sensor, and an optical flow estimation apparatus. The pixel sensor and the event-based sensor are separately connected to the optical flow estimation apparatus. The method may be performed, for example, by the optical flow estimation apparatus.

It should be further noted that, because the image sequence is obtained by photographing the target scene by using a pixel camera, the first image frame and the second image frame include pixel information of a target object in the target scene. Because event flow data is obtained by photographing the target scene by using an event-based camera, the first event flow data may capture real high-speed motion information (including linear motion and non-linear motion) of the target object in the target scene within the time period between the first image frame and the second image frame.

According to the optical flow estimation method provided in this application, the optical flow estimation apparatus first estimates a first optical flow between the first image frame and the second image frame based on the first image frame, the second image frame, and the first event frame, and then determines, based on a second event frame, a weight (namely, a first optical flow allocation mask) of the optical flow of the first image frame and the target moment relative to an optical flow of the first image frame and the second image frame. Because there is no motion assumption of the target object, the obtained first optical flow allocation mask has a feature of accurately allocating an optical flow in real motion. Therefore, accuracy of the target optical flow obtained by weighting the first optical flow by using the first optical flow allocation mask is high.

Optionally, the optical flow estimation apparatus may obtain the first image frame and the second image frame in a plurality of manners. This is not limited in this application.

In a possible implementation, the optical flow estimation apparatus may receive the first image frame and the second image frame that are sent by the pixel camera.

In another possible implementation, the optical flow estimation apparatus may obtain, through an input interface, the first image frame and the second image frame that are of another device or that are used for input.

Optionally, the target scene may include at least one target object, and some or all objects in the at least one target object are in a motion state.

Optionally, the optical flow estimation apparatus may obtain the first event frame in a plurality of manners. This is not limited in this application.

In a possible implementation, the optical flow estimation apparatus may receive event flow data sent by the event-based camera, where the event flow data includes event data of each event in at least one event, the at least one event one-to-one corresponds to at least one luminance change that occurs in the target scene between the first image frame and the second image frame, and the data of each event includes a timestamp, pixel coordinates, and a polarity; and the optical flow estimation apparatus may obtain the first event frame based on the event flow data. In other words, the event-based camera may collect the event flow data, and send the event flow data to the optical flow estimation apparatus.

In another possible implementation, the optical flow estimation apparatus may receive the first event frame sent by the event-based camera. In other words, the event-based camera may collect the event flow data, generate the first event frame based on the event flow data, and send the first event frame to the optical flow estimation apparatus.

It should be noted that the first image frame, the second image frame, and the first event frame have same resolution.

In a possible implementation, for example, the first image frame includes $H \times W$ pixels, both H and W are integers greater than 1, the first event frame may include a plurality of channels, and the plurality of channels may include a first channel, a second channel, a third channel, and a fourth channel. The first channel includes $H \times W$ first values, where the $H \times W$ first values one-to-one correspond to locations of the $H \times W$ pixels, and the first value indicates a quantity of times that luminance of a pixel at a corresponding location in the first image frame increases within the time period from the first image frame to the second image frame; the second channel includes $H \times W$ second values, where the $H \times W$ second values one-to-one correspond to the locations of the $H \times W$ pixels, and the second value indicates a quantity of times that luminance of a pixel at a corresponding location in the first image frame decreases within the time period from the first image frame to the second image frame; the third channel includes $H \times W$ third values, where the $H \times W$ third values one-to-one correspond to the locations of the $H \times W$ pixels, and the third value indicates time at which luminance of a pixel at a corresponding location in the first image frame increases for the last time within the time period from the first image frame to the second image frame; and the fourth channel includes $H \times W$ fourth values, where the $H \times W$ fourth values one-to-one correspond to the locations of the $H \times W$ pixels, and the fourth value indicates time at which luminance of a pixel at a corresponding location in the first image frame decreases for the last time within the time period from the first image frame to the second image frame.

Before the optical flow estimation apparatus determines the target optical flow based on the first image frame, the second image frame, and the first event frame, the optical flow estimation apparatus may obtain a second event frame, where the second event frame is used to describe a luminance change of the target scene within a time period from the first image frame to the target moment; and that the optical flow estimation apparatus determines a target optical flow based on the first image frame, the second image frame, and the first event frame includes: The optical flow estimation apparatus determines the target optical flow based on the first image frame, the second image frame, the first event frame, and the second event frame.

Specifically, the optical flow estimation apparatus may determine a first optical flow based on the first image frame, the second image frame, and the first event frame, where the first optical flow is an optical flow from the first image frame to the second image frame; determine a first optical flow allocation mask based on the second event frame, where the first optical flow allocation mask indicates a weight of the target optical flow relative to the first optical flow; and determine the target optical flow based on the first optical flow and the first optical flow allocation mask.

Optionally, the first optical flow may be a sparse optical flow, or may be a dense optical flow. This is not limited in this application.

In a possible implementation, for example, the first optical flow is the dense optical flow. The first optical flow indicates different motion directions by using different colors of pixels, and indicates different motion rates by using different luminance of the pixels.

Optionally, the optical flow estimation apparatus may determine the first optical flow based on the first image frame, the second image frame, and the first event frame in a plurality of manners. This is not limited in this application.

In a possible implementation, the optical flow estimation apparatus may input the first image frame, the second image frame, and the first event frame to a preset optical flow estimation model, to obtain the first optical flow.

To meet device-side deployment and real-time performance requirements, a network structure of the optical flow estimation model cannot be too complex. In addition, because optical flow estimation is a complex task, it is difficult for a network with a simple structure to complete high-precision optical flow estimation. Therefore, in this application, the network structure of the optical flow estimation model is obtained by training a lightweight first convolutional neural network. The first convolutional neural network may include several processing layers: dimension reduction, convolution, residual, deconvolution, and dimension increasing. Cyclic iteration is performed on the first convolutional neural network, to improve accuracy of the optical flow estimation, and to facilitate deployment of the optical flow estimation model on the device side.

Optionally, the optical flow estimation apparatus may input the first image frame, the second image frame, and the first event frame to the optical flow estimation model, and perform cyclic iteration, to obtain the first optical flow. In other words, the optical flow estimation apparatus may input the first image frame, the second image frame, and the first event frame to the optical flow estimation model, to obtain a second optical flow; and input the first image frame, the second image frame, the first event frame, and the second optical flow to the optical flow estimation model, to obtain a third optical flow. By analogy, the cyclic iteration is performed until the optical flow estimation model outputs the first optical flow when a loss function preset in the optical flow estimation model is met when the optical flow estimation model outputs the first optical flow.

It should be noted that the first optical flow allocation mask, the first image frame, the second image frame, and the first event frame have same resolution.

Optionally, the optical flow estimation apparatus may determine the first optical flow allocation mask based on the second event frame in a plurality of manners. This is not limited in this application.

In a possible implementation, the optical flow estimation apparatus may input the second event frame to a preset optical flow allocation model, to obtain the first optical flow allocation mask.

To meet device-side deployment and real-time performance requirements, a network structure of the optical flow allocation model cannot be too complex. Therefore, in this application, the network structure of the optical flow allocation model is obtained by training a lightweight second CNN. The second CNN may include processing layers such as fusion and convolution, and cyclic iteration is performed on the second CNN, to improve accuracy of optical flow estimation, and to facilitate deployment of the optical flow estimation model on the device side.

Optionally, the optical flow estimation apparatus may input the second event frame to the optical flow allocation model, and perform cyclic iteration, to obtain the first optical flow allocation mask.

According to a second aspect, this application further provides an optical flow estimation apparatus, including an obtaining module and an optical flow estimation module. The obtaining module is configured to:

obtain a first image frame and a second image frame, where the first image frame and the second image frame are any two adjacent image frames in an image sequence, and the image sequence is obtained by photographing a target scene; and obtain a first event frame, where the first event frame is used to describe a luminance change of the target scene within a time period from the first image frame to the second image frame; and the optical flow estimation module is configured to determine a target optical flow based on the first image frame, the second image frame, and the first event frame, where the target optical flow is an optical flow from the first image frame to a target moment, and the target moment is any moment between the first image frame and the second image frame.

The obtaining module is further configured to: before the target optical flow is determined based on the first image frame, the second image frame, and the first event frame, obtain a second event frame, where the second event frame is used to describe a luminance change of the target scene within a time period from the first image frame to the target moment; and the optical flow estimation module is specifically configured to determine the target optical flow based on the first image frame, the second image frame, the first event frame, and the second event frame.

In a possible implementation, the optical flow estimation module includes an inter-frame optical flow estimation submodule, an optical flow allocation submodule, and an inter-frame optical flow estimation submodule at any moment, where the inter-frame optical flow estimation submodule is configured to determine a first optical flow based on the first image frame, the second image frame, and the first event frame, where the first optical flow is an optical flow from the first image frame to the second image frame; the optical flow allocation submodule is configured to determine a first optical flow allocation mask based on the second event frame, where the first optical flow allocation mask indicates a weight of the target optical flow relative to the first optical flow; and the inter-frame optical flow estimation submodule at any moment is configured to determine the target optical flow based on the first optical flow and the first optical flow allocation mask.

In a possible implementation, the inter-frame optical flow estimation submodule is specifically configured to input the first image frame, the second image frame, and the first event frame to a preset optical flow estimation model, to obtain the first optical flow.

In a possible implementation, the inter-frame optical flow estimation submodule is specifically configured to: input the first image frame, the second image frame, and the first event frame to the preset optical flow estimation model; and perform cyclic iteration, to obtain the first optical flow.

In a possible implementation, the optical flow allocation submodule is specifically configured to input the second event frame to a preset optical flow allocation model, to obtain the first optical flow allocation mask.

In a possible implementation, the optical flow allocation submodule is specifically configured to input: the second event frame to the optical flow allocation model, and perform cyclic iteration, to obtain the first optical flow allocation mask.

In a possible implementation, the first image frame includes H×W pixels, both H and W are integers greater than 1, the first event frame includes a plurality of channels, and the plurality of channels include a first channel, a second channel, a third channel, and a fourth channel; the first channel includes H×W first values, where the H×W first values one-to-one correspond to locations of the H×W pixels, and the first value indicates a quantity of times that luminance of a pixel at a corresponding location in the first image frame increases within the time period from the first image frame to the second image frame; the second channel includes H×W second values, where the H×W second values one-to-one correspond to the locations of the H×W pixels, and the second value indicates a quantity of times that luminance of a pixel at a corresponding location in the first image frame decreases within the time period from the first image frame to the second image frame; the third channel includes H×W third values, where the H×W third values one-to-one correspond to the locations of the H×W pixels, and the third value indicates a timestamp at which luminance of a pixel at a corresponding location in the first image frame increases for the last time within the time period from the first image frame to the second image frame; and the fourth channel includes H×W fourth values, where the H×W fourth values one-to-one correspond to the locations of the H×W pixels, and the fourth value indicates a timestamp at which luminance of a pixel at a corresponding location in the first image frame decreases for the last time within the time period from the first image frame to the second image frame.

In a possible implementation, the obtaining module is specifically configured to: obtain event flow data, where the event flow data includes event data of each event in at least one event, the at least one event one-to-one corresponds to at least one luminance change that occurs in the target scene between the first image frame and the second image frame, and the data of each event includes a timestamp, pixel coordinates, and a polarity; and obtain the first event frame based on the event flow data.

According to a third aspect, this application further provides an optical flow estimation apparatus. The optical flow estimation apparatus may include at least one processor and at least one communication interface, where the at least one processor is coupled to the at least one communication interface, the at least one communication interface is configured to provide information and/or data for the at least one processor, and the at least one processor is configured to run computer program instructions to perform the optical flow estimation method according to the first aspect and any one of the possible implementations of the first aspect.

Optionally, the apparatus may be a chip or an integrated circuit.

According to a fourth aspect, this application further provides a terminal. The terminal may include the optical flow estimation apparatus according to the second aspect and any one of the possible implementations of the second aspect, or the optical flow estimation apparatus according to the third aspect.

According to a fifth aspect, this application further provides a computer-readable storage medium, configured to store a computer program, where when the computer program is run by a processor, the optical flow estimation method according to the first aspect and any one of the possible implementations of the first aspect is implemented.

According to a sixth aspect, this application further provides a computer program product, where when the computer program product runs on a processor, the optical flow estimation method according to the first aspect and any one of the possible implementations of the first aspect is implemented.

The optical flow estimation apparatus, the computer storage medium, the computer program product, the chip, and the terminal provided in this application are all configured to perform the optical flow estimation method provided above. Therefore, for beneficial effect that can be achieved by the optical flow estimation apparatus, the computer storage medium, the computer program product, the chip, and the terminal, refer to beneficial effect of the optical flow estimation method provided above. Details are not described herein again.

**BRIEF DESCRIPTION OF DRAWINGS**

FIG. 1 is a schematic diagram of event flow data according to an embodiment of this application;
FIG. 2 is a schematic diagram of a sparse optical flow and a dense optical flow according to an embodiment of this application;
FIG. 3 is a schematic block diagram of an optical flow estimation system 100 according to an embodiment of this application;
FIG. 4 is a schematic flowchart of an optical flow estimation method 200 according to an embodiment of this application;
FIG. 5 is another schematic diagram of event flow data according to an embodiment of this application;
FIG. 6 is a schematic diagram of a first event frame according to an embodiment of this application;
FIG. 7 is a schematic block diagram of an optical flow estimation apparatus 300 according to an embodiment of this application;
FIG. 8 is a schematic flowchart of an optical flow estimation method according to an embodiment of this application; and

FIG. 9 is a schematic block diagram of an optical flow estimation apparatus 400 according to an embodiment of this application.

## DESCRIPTION OF EMBODIMENTS

The following describes technical solutions in embodiments of this application with reference to accompanying drawings in embodiments of this application.

1. Pixel camera

The pixel camera is a conventional camera that collects a luminance value of a scene at a fixed rate (namely, a frame rate) and outputs the luminance value as image data at a fixed rate.

2. Event-based camera (event-based camera)

The event-based camera is a new type of sensor that captures a dynamic change of pixel luminance in a scene based on an event-driven mode.

To some extent, the conventional camera captures static/still space, while the event-based camera aims to sensitively capture an object in motion.

Unlike the conventional camera, the event-based camera only observes "motion" in the scene, or "a luminance change" in the scene, to be exact. The event-based camera outputs a luminance change (1 or 0) of a corresponding pixel only when the luminance changes. The event-based camera has advantages such as fast response and a wide dynamic range.

The event-based camera outputs a single pixel only when light intensity changes. For example, if the luminance increases and exceeds a threshold, a corresponding pixel outputs a luminance increase event. The event-based camera does not have a concept of frame, and when the scene changes, the event-based camera produces a series of pixel-level outputs. Because theoretical time resolution of the event-based camera is up to 1 μs, a delay is very low, lower than a motion rate in most common scenes. Therefore, there is no motion blur problem. In addition, each pixel of the event-based camera works independently and asynchronously. Therefore, the dynamic range is large. The event-based camera also has an advantage of low energy consumption.

To sum up, the conventional camera photographs the scene in full frame at the fixed frame rate, and all pixels work synchronously. For the event-based camera, each pixel works independently and asynchronously. A sampling rate is up to one million hertz (Hz) and outputs only the luminance change (namely, the event). An event is described based on a four-tuple event data, and event data output by all pixels is summarized, to form an event list including events that is used as event flow data output by the camera.

For example, event data of an event may be indicated as (x, y, t, p), where (x, y) is pixel coordinates of the event, t is a moment at which the time occurs, p is a polarity of the event (For example, p=0 indicates that luminance of the pixel decreases compared with previous sampled luminance, and p=1 indicates that luminance of the pixel increases compared with previous sampled luminance).

A commonly used event-based camera may include a dynamic vision sensor (dynamic vision sensor, DVS) or a dynamic and active-pixel vision sensor (dynamic and active-pixel vision sensor, DAVIS).

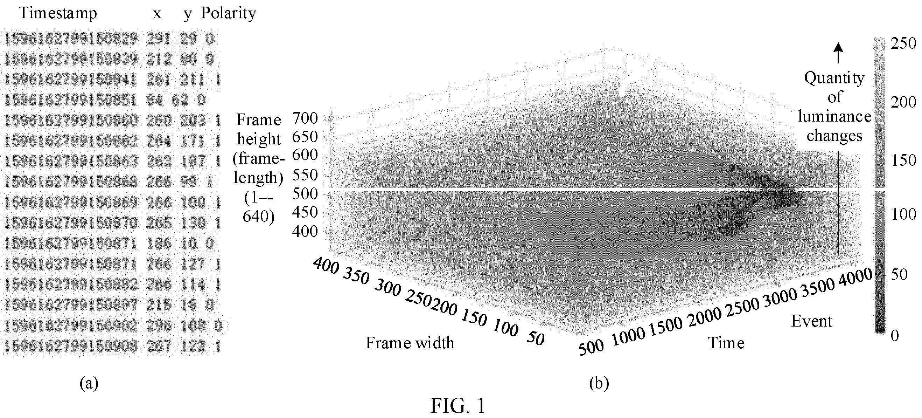

For example, FIG. 1 is a schematic diagram of event flow data. In (a) in FIG. 1, the event flow data is indicated by using an event data list. The event data list includes a plurality of pieces of event data. Each piece of event data describes one event, and each piece of event data is indicated by four tuples, namely, a timestamp, an x-coordinate, a y-coordinate, and a polarity. In (b) in FIG. 1, the event flow data is indicated by a visual diagram. Three-dimensional coordinate axes are a frame width, a frame height, and time. A color of a coordinate point in the three-dimensional coordinate indicates a quantity of luminance changes of a pixel at a corresponding location. A brighter color indicates a larger quantity of luminance changes.

3. Optical flow

An optical flow is a flow of light, and is a method that finds a correspondence between a previous frame and a current frame based on a change of a pixel in an image sequence in time domain and correlation between adjacent frames, to calculate motion information of an object between the adjacent frames.

Based on whether a sparse point in an image is selected for optical flow estimation, the optical flow can be classified into a sparse optical flow and a dense optical flow.

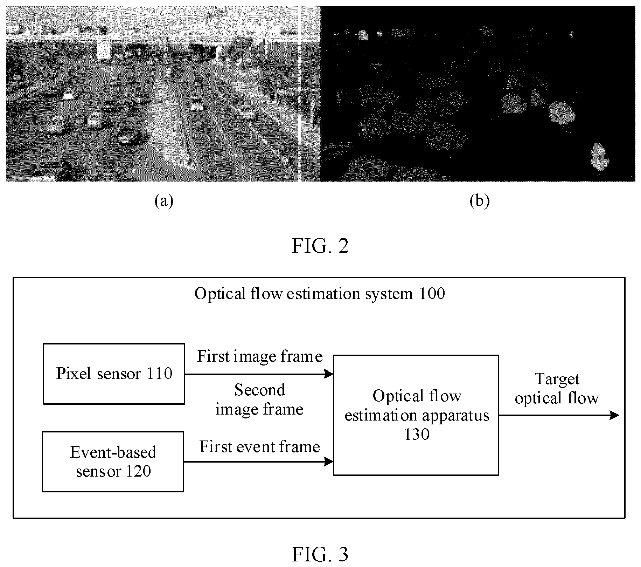

For example, FIG. 2 is a schematic diagram of a sparse optical flow and a dense optical flow. (a) in FIG. 2 is a schematic diagram of the sparse optical flow, and describes optical flows of pixels that are of some prominent feature points (such as corner points) in an image and that move to a next frame, and (b) in FIG. 2 is a schematic diagram of the dense optical flow, and describes optical flows of all pixels that are in an image and that move to a next frame. In the dense optical flow diagram, different colors indicate different motion directions, and different luminance indicates different motion rates.

In the conventional technology, an optical flow network (FlowNet) is a model that is obtained by training a convolutional neural network and that is used to estimate an optical flow. Optical flow estimation is to estimate a pixel-level optical flow between any two adjacent image frames in an image sequence based on the two image frames.

For example, two adjacent image frames are a first image frame and a second image frame, and the first image frame is a previous frame of the second image frame. An existing optical flow network may be used to estimate a bidirectional optical flow between the first image frame and the second image frame, namely, an optical flow from the first image frame to the second image frame and an optical flow from the second image frame to the first image frame.

Because a conventional camera captures an image at a constant frequency (namely, a frame rate), even if the frame rate can reach 1 kHz, there is a delay of 1 ms. Within the delay of 1 ms, a target object may be moving at a high speed.

Optical flows from the two image frames to any moment between the two image frames, namely, an optical flow from the first image frame to the any moment and an optical flow from the second image frame to the any moment, can be evenly allocated only through a linear motion assumption and based on a time length as a weight.

However, in the scene, the target object may move based on non-linear motion. Therefore, accuracy is low when the optical flows from two adjacent image frames to any moment between the two image frames are estimated by using the existing linear motion assumption method.

First, an optical flow estimation system to which an optical flow estimation method and apparatus provided in this application are applied is described.

FIG. 3 is a schematic block diagram of an optical flow estimation system 100 according to an embodiment of this application. As shown in FIG. 3, the optical flow estimation system 100 may include a pixel sensor 110, an event-based sensor 120, and an optical flow estimation apparatus 130. The pixel sensor 110 and the event-based sensor 120 are separately connected to the optical flow estimation apparatus 130.

The pixel sensor 110 is configured to: photograph a target scene to obtain an image sequence; and send a first image frame and a second video frame to the optical flow estimation apparatus 130, where the first image frame and the second image frame are any two adjacent image frames in the image sequence.

For example, the pixel sensor may be a pixel camera. A model and a type of the pixel camera are not limited in this application.

The event-based sensor 120 is configured to: photograph the target scene, to obtain event flow data, where the event flow data includes event data of each event in at least one event, the at least one event one-to-one corresponds to at least one luminance change that occurs in the target scene between the first image frame and the second image frame, and the data of each event includes a timestamp, pixel coordinates, and a polarity; obtain the first event frame based on the event flow data, where the first event frame is used to describe a luminance change of the target scene within a time period from the first image frame to the second image frame, and the first image frame, the second image frame, and the first event frame have same resolution; and send the first image frame, the second image frame, and the first event frame to the optical flow estimation apparatus 130.

For example, the event-based sensor may be an event-based camera. A model and a type of the event-based camera are not limited in this application.

The optical flow estimation apparatus 130 is configured to determine a target optical flow based on the first image frame, the second image frame, and the first event frame (for a specific method, refer to the optical flow estimation method provided in this application described below), where the target optical flow is an optical flow from the first image frame to a target moment, and the target moment is any moment between the first image frame and the second image frame.

It should be noted that, the foregoing uses only an example in which the optical flow (namely, the target optical flow) from the first image frame to the target moment for description. However, this application is not limited thereto. A method for estimating an optical flow from the second image frame to the target moment is similar to the method for estimating the target optical flow. For details, refer to a target optical flow estimation method provided in this application. Details are not described herein.

Optionally, the event-based sensor 120 may directly send the event flow data to the optical flow estimation apparatus 130. Correspondingly, the optical flow estimation apparatus 130 obtains the first event frame based on the event flow data.

Optionally, the apparatuses may communicate with each other in a wired manner or a wireless manner. This is not limited in this application.

For example, the wired manner may be implementing communication through a data line connection or through an internal bus connection.

For example, the wireless manner may be implementing communication by using a communication network. The communication network may be a local area network, or may be a wide area network transferred by using a relay (relay) device, or may include a local area network and a wide area network. When the communication network is the local area network, the communication network may be a wireless fidelity (wireless fidelity, Wi-Fi) hotspot network or a Wi-Fi peer-to-peer (peer-to-peer, P2P) network, a Bluetooth (Bluetooth) network, a ZigBee network, a near field communication (near field communication, NFC) network, a possible future general short-range communication network, or the like. When the communication network is the wide area network, for example, the communication network may be a 3rd generation mobile communication technology (3rd generation wireless telephone technology, 3G) network, a 4th generation mobile communication technology (4th generation mobile communication technology, 4G) network, a 5th generation mobile communication technology (5th generation mobile communication technology, 5G) network, a public land mobile network (public land mobile network, PLMN), the Internet (Internet), or the like. This is not limited in this application.

According to the optical flow estimation system provided in this application, because the first event frame can capture low-delay motion information of a target in the target scene between the first image frame and the second image frame, the first image frame and the second image frame can capture pixel information of the target scene. Therefore, the target optical flow is determined based on the first event frame, the first image frame, and the second image frame. This can improve accuracy of the target optical flow.

The foregoing describes the optical flow estimation system provided in this application, and the following further describes the optical flow estimation method applied to the optical flow estimation system provided in this application.

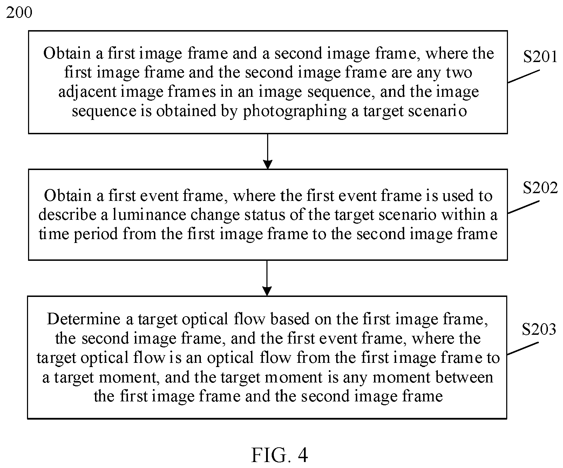

FIG. 4 shows an optical flow estimation method 200 according to an embodiment of this application. The optical flow estimation method 200 may be used in the optical flow estimation system 100. As shown in FIG. 2, the optical flow estimation method 200 may include the following steps. It should be noted that the following steps may be performed in various sequences and/or simultaneously, and are not limited to an execution sequence shown in FIG. 4.

S201: Obtain a first image frame and a second image frame, where the first image frame and the second image frame are any two adjacent image frames in an image sequence, and the image sequence is obtained by photographing a target scene.

Optionally, the method 200 may be performed by an optical flow estimation apparatus.

For example, the optical flow estimation apparatus herein may be the optical flow estimation apparatus 130 in the optical flow estimation system 100.

Optionally, the optical flow estimation apparatus may obtain the first image frame and the second image frame in a plurality of manners. This is not limited in this application.

In a possible implementation, the optical flow estimation apparatus may receive the first image frame and the second image frame that are sent by a pixel camera.

For example, the pixel camera herein may be the pixel camera 110 in the optical flow estimation system 100.

In another possible implementation, the optical flow estimation apparatus may obtain, through an input interface, the first image frame and the second image frame that are of another device or that are used for input.

Optionally, the target scene may include at least one target object, and some or all objects in the at least one target object are in a motion state.

S202: Obtain a first event frame, where the first event frame is used to describe a luminance change of the target scene within a time period from the first image frame to the second image frame.

Optionally, the optical flow estimation apparatus may obtain the first event frame in a plurality of manners. This is not limited in this application.

In a possible implementation, the optical flow estimation apparatus may receive event flow data sent by an event-based camera, where the event flow data includes event data of each event in at least one event, the at least one event one-to-one corresponds to at least one luminance change that occurs in the target scene between the first image frame and the second image frame, and the data of each event includes a timestamp, pixel coordinates, and a polarity; and the optical flow estimation apparatus may obtain the first event frame based on the event flow data. In other words, the event-based camera may collect the event flow data, and send the event flow data to the optical flow estimation apparatus.

In another possible implementation, the optical flow estimation apparatus may receive the first event frame sent by the event-based camera. In other words, the event-based camera may collect the event flow data, generate the first event frame based on the event flow data, and send the first event frame to the optical flow estimation apparatus.

For example, the event-based camera herein may be the event-based camera 120 in the optical flow estimation system 100.

It should be noted that the first image frame, the second image frame, and the first event frame have same resolution.

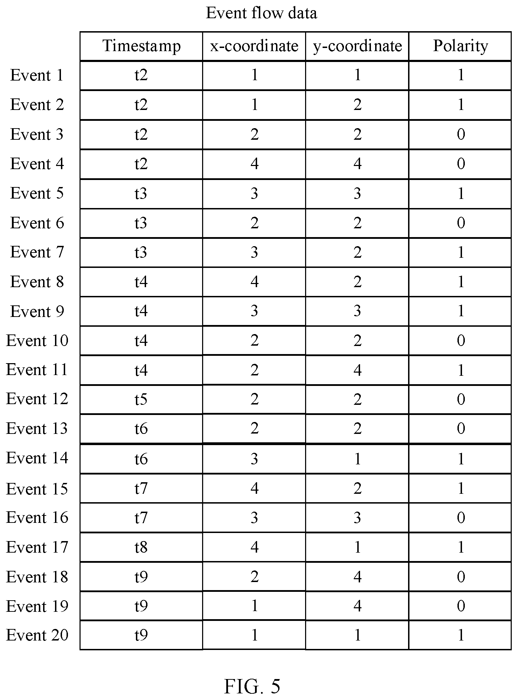

For example, the resolution of the first image frame, the second image frame, and the first event frame is all $4\times4$. FIG. 5 is a schematic diagram of event flow data according to an embodiment of this application. As shown in FIG. 5, the event flow data includes 20 pieces of event data, and the 20 pieces of event data respectively describe 20 luminance changes (namely, 20 events that occur in the target scene) that are of a pixel in the target scene and that occur within the time period from the first image frame (namely, a moment t1) to the second image frame (namely, a moment t10), where t1 to t10 sequentially increase. As shown in FIG. 5, an event 1 is used as an example. Event data of the event 1 includes the following four tuples: A timestamp is $t1+\Delta t1$, an x-coordinate is 1, a y-coordinate is 1, and a polarity is 1 (that is, luminance increases). The described event 1 is that luminance of a pixel whose coordinates are (1, 1) increases at the moment $t1+\Delta t1$. Other 19 events have similar understandings, and details are not described herein. Motion speeds and motion directions of different pixels at different moments may be estimated based on the event flow data.

In a possible implementation, for example, the first image frame includes $H\times W$ pixels, both H and W are integers greater than 1, the first event frame may include a plurality of channels, and the plurality of channels may include a first channel, a second channel, a third channel, and a fourth channel. The first channel includes $H\times W$ first values, where the $H\times W$ first values one-to-one correspond to locations of the H×W pixels, and the first value indicates a quantity of times that luminance of a pixel at a corresponding location in the first image frame increases within the time period from the first image frame to the second image frame; the second channel includes H×W second values, where the H×W second values one-to-one correspond to the locations of the H×W pixels, and the second value indicates a quantity of times that luminance of a pixel at a corresponding location in the first image frame decreases within the time period from the first image frame to the second image frame; the third channel includes H×W third values, where the H×W third values one-to-one correspond to the locations of the H×W pixels, and the third value indicates time at which luminance of a pixel at a corresponding location in the first image frame increases for the last time within the time period from the first image frame to the second image frame; and the fourth channel includes H×W fourth values, where the H×W fourth values one-to-one correspond to the locations of the H×W pixels, and the fourth value indicates time at which luminance of a pixel at a corresponding location in the first image frame decreases for the last time within the time period from the first image frame to the second image frame.

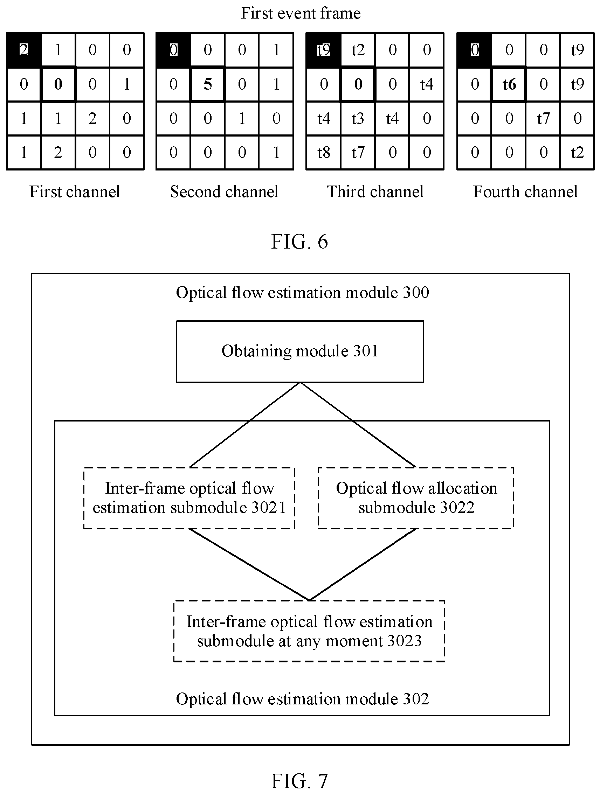

For example, FIG. 6 is a schematic diagram of the first event frame according to this embodiment of this application. The first event frame may include a first channel, a second channel, a third channel, and a fourth channel. The first event frame is obtained based on the event flow data shown in FIG. 5. As shown in FIG. 6, the pixel whose coordinates are (1, 1) is used as an example. In the event flow data in FIG. 5, a polarity of the pixel is 1 (that is, the luminance increases) at a moment t2 and a moment t9. In other words, between t1 and t10, a quantity of times that the luminance of the pixel increases is 2, a quantity of times that the luminance of the pixel decreases is 0, last increase time is t9, and last decrease time does not exist. Therefore, a first value at the pixel (as shown by a pixel with a black background of the first channel in FIG. 6) whose coordinates are (1, 1) in the first channel is 2, a second value at the pixel (as shown by a pixel with a black background of the second channel in FIG. 6) whose coordinates are (1, 1) in the second channel is 0, a third value at the pixel (as shown by a pixel with a black background of the third channel in FIG. 6) whose coordinates are (1, 1) in the third channel is t9, and a fourth value at the pixel (as shown by a pixel with a black background of the fourth channel in FIG. 6) whose coordinates are (1, 1) in the fourth channel is 0.

Similarly, a pixel whose coordinates are (2, 2) is used as an example. In the event flow data in FIG. 5, a polarity of the pixel is 0 (that is, luminance decreases) at the moment t2, a moment t3, a moment t4, a moment t5, and a moment t6. In other words, between t1 and t10, a quantity of times that the luminance of the pixel increases is 0, a quantity of times that the luminance of the pixel decreases is 5, last increase time does not exist, and last decrease time is t6. Therefore, a first value at the pixel (as shown by a pixel with a bold border of the first channel in FIG. 6) whose coordinates are (2, 2) in the first channel is 0, a second value at the pixel (as shown by a pixel with a bold border of the second channel in FIG. 6) whose coordinates are (2, 2) in the second channel is 5, a third value at the pixel (as shown by a pixel with a bold border of the third channel in FIG. 6) whose coordinates are (2, 2) in the third channel is 0, and a fourth value at the pixel (as shown by a pixel with a bold border of the fourth channel in FIG. 6) whose coordinates are (2, 2) in the fourth channel is t6.

S203: Determine a target optical flow based on the first image frame, the second image frame, and the first event frame, where the target optical flow is an optical flow from the first image frame to a target moment, and the target moment is any moment between the first image frame and the second image frame.

It should be further noted that, because the image sequence is obtained by photographing the target scene by using the pixel camera, the first image frame and the second image frame include pixel information of the target object in the target scene. Because the event flow data is obtained by photographing the target scene by using the event-based camera, the first event flow data may capture real high-speed motion information (including linear motion and non-linear motion) of the target object in the target scene within the time period between the first image frame and the second image frame.

In conclusion, estimating the optical flow at the target moment based on the first image frame, the second image frame, and the first event frame can improve accuracy of the target optical flow.

Before S203, the optical flow estimation apparatus may obtain a second event frame, where the second event frame is used to describe the luminance change of the target scene within the time period from the first image frame to the target moment. Correspondingly, in S203, the optical flow estimation apparatus may determine the target optical flow based on the first image frame, the second image frame, the first event frame, and the second event frame.

It should be noted that, for a manner in which the second event frame is obtained, refer to the foregoing manner in which the first event frame is obtained. Details are not described herein.

Specifically, the optical flow estimation apparatus may determine a first optical flow based on the first image frame, the second image frame, and the first event frame, where the first optical flow is an optical flow from the first image frame to the second image frame; determine a first optical flow allocation mask based on the second event frame, where the first optical flow allocation mask indicates a weight of the target optical flow relative to the first optical flow; and determine the target optical flow based on the first optical flow and the first optical flow allocation mask.

Optionally, the first optical flow may be a sparse optical flow, or may be a dense optical flow. This is not limited in this application.

In a possible implementation, for example, the first optical flow is the dense optical flow. The first optical flow indicates different motion directions by using different colors of pixels, and indicates different motion rates by using different luminance of the pixels.

Optionally, the optical flow estimation apparatus may determine the first optical flow based on the first image frame, the second image frame, and the first event frame in a plurality of manners. This is not limited in this application.

In a possible implementation, the optical flow estimation apparatus may input the first image frame, the second image frame, and the first event frame to a preset optical flow estimation model, to obtain the first optical flow.

To meet device-side deployment and real-time performance requirements, a network structure of the optical flow estimation model cannot be too complex. In addition, because optical flow estimation is a complex task, it is difficult for a network with a simple structure to complete high-precision optical flow estimation. Therefore, in this application, the network structure of the optical flow estimation model is obtained by training a lightweight first convolutional neural network (convolutional neural network, CNN). The first CNN may include several processing layers: dimension reduction, convolution, residual, deconvolution, and dimension increasing. Cyclic iteration is performed on the first CNN, to improve accuracy of the optical flow estimation, and to facilitate deployment of the optical flow estimation model on the device side.

Optionally, the optical flow estimation apparatus may input the first image frame, the second image frame, and the first event frame to the optical flow estimation model, and perform cyclic iteration, to obtain the first optical flow. In other words, the optical flow estimation apparatus may input the first image frame, the second image frame, and the first event frame to the optical flow estimation model, to obtain a second optical flow; and input the first image frame, the second image frame, the first event frame, and the second optical flow to the optical flow estimation model, to obtain a third optical flow. By analogy, the cyclic iteration is performed until the optical flow estimation model outputs the first optical flow when a loss function preset in the optical flow estimation model is met when the optical flow estimation model outputs the first optical flow.

It should be noted that the first optical flow allocation mask, the first image frame, the second image frame, and the first event frame have same resolution.

Optionally, the optical flow estimation apparatus may determine the first optical flow allocation mask based on the second event frame in a plurality of manners. This is not limited in this application.

In a possible implementation, the optical flow estimation apparatus may input the second event frame to a preset optical flow allocation model, to obtain the first optical flow allocation mask.

To meet device-side deployment and real-time performance requirements, a network structure of the optical flow allocation model cannot be too complex. Therefore, in this application, the network structure of the optical flow allocation model is obtained by training a lightweight second CNN. The second CNN may include processing layers such as fusion and convolution, and cyclic iteration is performed on the second CNN, to improve accuracy of optical flow estimation, and to facilitate deployment of the optical flow estimation model on the device side.

For example, the fusion processing layer is used to fuse second event frames of a plurality of channels into an image of one channel. The convolution processing layer is used to separately perform convolution processing on the image of the channel by using a convolution kernel in an X direction and a convolution kernel in a Y direction, and output the first optical flow allocation mask of one channel, where the resolution of the first optical flow allocation mask is the same as that of the second event frame.

For example, the X-direction convolution kernel

may be $\begin{bmatrix} 0 & 0 & 0 \\ 1 & 0 & 1 \\ 0 & 0 & 0 \end{bmatrix}$ , and the Y-direction convolution

kernel may be $\begin{bmatrix} 0 & 1 & 0 \\ 0 & 0 & 0 \\ 0 & 1 & 0 \end{bmatrix}$ .

Optionally, the optical flow estimation apparatus may input the second event frame to the optical flow allocation model, and perform cyclic iteration, to obtain the first optical flow allocation mask. In other words, the optical flow estimation apparatus may input the second event frame to the optical flow allocation model, to obtain a second optical flow allocation mask; and input the second event frame and the second optical flow allocation mask to the optical flow allocation model, to obtain a third optical flow allocation mask. By analogy, the cyclic iteration is performed until the optical flow allocation model outputs the first optical flow allocation mask when a loss function preset in the optical flow allocation model is met when the optical flow allocation model outputs the first optical flow allocation mask.

In a possible implementation, the optical flow estimation apparatus may weight an optical flow at a corresponding location in the first optical flow by using the first optical flow allocation mask, to obtain the target optical flow.

According to the optical flow estimation method provided in this application, the optical flow estimation apparatus first estimates the first optical flow between the first image frame and the second image frame based on the first image frame, the second image frame, and the first event frame, and then determines, based on the second event frame, a weight (namely, the first optical flow allocation mask) of the optical flow of the first image frame and the target moment relative to the optical flow of the first image frame and the second image frame. Because there is no motion assumption of the target object, the obtained first optical flow allocation mask has a feature of accurately allocating an optical flow in real motion. Therefore, the accuracy of the target optical flow obtained by weighting the first optical flow by using the first optical flow allocation mask is high.

The foregoing describes the optical flow estimation method provided in embodiments of this application with reference to FIG. 4 to FIG. 6. The following further describes the optical flow estimation apparatus in embodiments of this application.

FIG. 7 is a schematic block diagram of an optical flow estimation apparatus 300 according to an embodiment of this application. The optical flow estimation apparatus 300 may include an obtaining module 301 and an optical flow estimation module 302.

The obtaining module 301 is configured to: obtain a first image frame and a second image frame, where the first image frame and the second image frame are any two adjacent image frames in an image sequence, and the image sequence is obtained by photographing a target scene; and obtain a first event frame, where the first event frame is used to describe a luminance change of the target scene between the first image frame and the second image frame.

The optical flow estimation module 302 is configured to determine a target optical flow based on the first image frame, the second image frame, and the first event frame, where the target optical flow includes at least one of an optical flow of a corresponding pixel between the first image frame and a target moment and an optical flow of a corresponding pixel between the target moment and the second image frame, and the target moment is any moment between the first image frame and the second image frame.

The obtaining module 301 is further configured to: before the target optical flow is determined based on the first image frame, the second image frame, and the first event frame, obtain a second event frame, where the second event frame is used to describe a luminance change of the target scene between the first image frame and the target moment; and the optical flow estimation module 302 is specifically configured to determine the target optical flow based on the first image frame, the second image frame, the first event frame, and the second event frame.

Optionally, the optical flow estimation module 302 may include an inter-frame optical flow estimation submodule 3021, an optical flow allocation submodule 3022, and an inter-frame optical flow estimation submodule at any moment 3023.

In a possible implementation, the inter-frame optical flow estimation submodule 3021 is configured to determine a first optical flow based on the first image frame, the second image frame, and the first event frame, where the first optical flow is an optical flow of a corresponding pixel between the first image frame and the second image frame; the optical flow allocation submodule 3022 is configured to determine a first optical flow allocation mask based on the second event frame, where the first optical flow allocation mask indicates a weight of the target optical flow relative to the first optical flow; and the inter-frame optical flow estimation submodule at any moment 3023 is configured to determine the target optical flow based on the first optical flow and the first optical flow allocation mask.

In a possible implementation, the inter-frame optical flow estimation submodule 3021 is specifically configured to input the first image frame, the second image frame, and the first event frame to a preset optical flow estimation model, to obtain the first optical flow.

In a possible implementation, the inter-frame optical flow estimation submodule 3021 is specifically configured to: input the first image frame, the second image frame, and the first event frame to the preset optical flow estimation model; and perform cyclic iteration, to obtain the first optical flow.

In a possible implementation, the optical flow allocation submodule 3022 is specifically configured to input the second event frame to a preset optical flow allocation model, to obtain the first optical flow allocation mask.

In a possible implementation, the optical flow allocation submodule 3022 is specifically configured to: input the second event frame to the optical flow allocation model, and perform cyclic iteration, to obtain the first optical flow allocation mask.

In a possible implementation, the first image frame includes H×W pixels, both H and W are integers greater than 1, the first event frame includes a plurality of channels, and the plurality of channels include a first channel, a second channel, a third channel, and a fourth channel; the first channel includes H×W first values, where the H×W first values one-to-one correspond to locations of the H×W pixels, and the first value indicates a quantity of times that luminance of a pixel at a corresponding location in the first image frame increases between the first image frame and the second image frame; the second channel includes H×W second values, where the H×W second values one-to-one correspond to the locations of the H×W pixels, and the second value indicates a quantity of times that luminance of a pixel at a corresponding location in the first image frame decreases between the first image frame and the second image frame; the third channel includes H×W third values, where the H×W third values one-to-one correspond to the locations of the H×W pixels, and the third value indicates time at which luminance of a pixel at a corresponding location in the first image frame increases for the last time between the first image frame and the second image frame; and the fourth channel includes H×W fourth values, where the H×W fourth values one-to-one correspond to the locations of the H×W pixels, and the fourth value indicates time at which luminance of a pixel at a corresponding location in the first image frame decreases for the last time between the first image frame and the second image frame.

In a possible implementation, the obtaining module is specifically configured to: obtain event flow data, where the event flow data includes event data of each event in at least one event, the at least one event one-to-one corresponds to at least one luminance change that occurs in the target scene between the first image frame and the second image frame, and the data of each event includes a timestamp, pixel coordinates, and a polarity; and obtain the first event frame based on the event flow data.

It should be noted that content such as information exchange between the modules and an execution process thereof are based on a same concept as the method embodiments of this application. For details about specific functions and technical effect of the content, refer to the method embodiments. The details are not described herein again. In an optional example, the optical flow estimation apparatus 300 may be specifically the optical flow estimation apparatus in the foregoing embodiment of the optical flow estimation method 200, and the optical flow estimation apparatus 300 may be configured to perform the procedures and/or steps corresponding to the optical flow estimation apparatus in the foregoing embodiment of the optical flow estimation method 200. To avoid repetition, details are not described herein again.

One or more of the modules in the embodiment shown in FIG. 7 may be implemented by software, hardware, firmware, or a combination thereof. The software or the firmware includes but is not limited to computer program instructions or code, and may be executed by a hardware processor. The hardware includes but is not limited to various integrated circuits, such as a central processing unit (CPU, Central Processing Unit), a digital signal processor (DSP, Digital Signal Processor), a field programmable gate array (FPGA, Field Programmable Gate Array), or an application-specific integrated circuit (ASIC, Application-Specific Integrated Circuit).

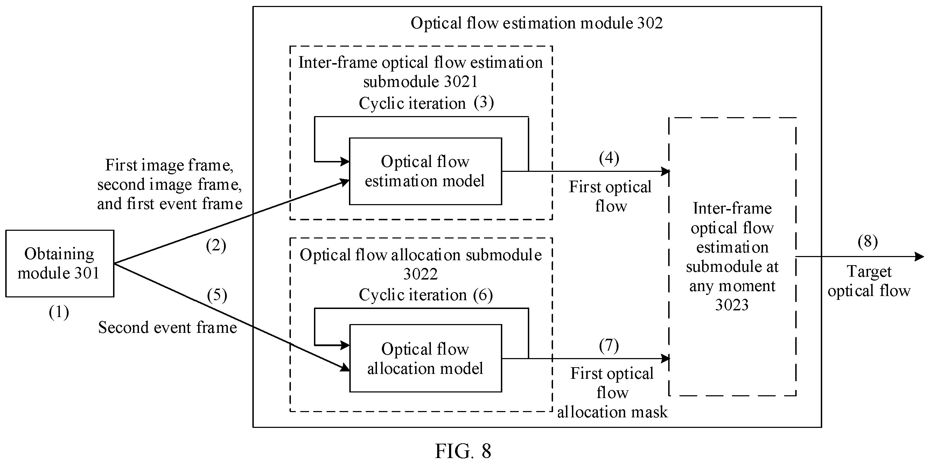

For example, FIG. 8 is a schematic flowchart of an optical flow estimation method according to an embodiment of this application. Optionally, steps in the procedure may be performed by the optical flow estimation apparatus 300 shown in FIG. 7. It should be noted that the following steps may be performed in various sequences and/or simultaneously, and are not limited to an execution sequence shown in FIG. 8. The procedure includes the following steps.

(1) An obtaining module 301 obtains a first image frame, a second image frame, a first event frame, and a second event frame. For details, refer to the related descriptions in step 201 and step 202 of the foregoing method.

(2) The obtaining module 301 sends the first image frame, the second image frame, and the first event frame to an inter-frame optical flow estimation submodule 3021.

(3) The inter-frame optical flow estimation submodule 3021 inputs the first image frame, the second image frame, and the first event frame to an optical flow estimation model, and performs cyclic iteration, to obtain a first optical flow. For details, refer to the related description in step 203 of the foregoing method.

(4) The inter-frame optical flow estimation submodule 3021 sends the first optical flow to an inter-frame optical flow estimation submodule at any moment 3023.

(5) The obtaining module 301 sends the second event frame to an optical flow allocation submodule 3022.

(6) The optical flow allocation submodule 3022 inputs the second event frame to an optical flow allocation model, and performs cyclic iteration, to obtain a first optical flow allocation mask. For details, refer to the related description in step 203 of the foregoing method.

(7) The optical flow allocation submodule 3022 sends the first optical flow allocation mask to the inter-frame optical flow estimation submodule at any moment 3023.

(8) The optical flow allocation submodule 3022 weights the first optical flow by using the first optical flow allocation mask, to obtain the target optical flow.

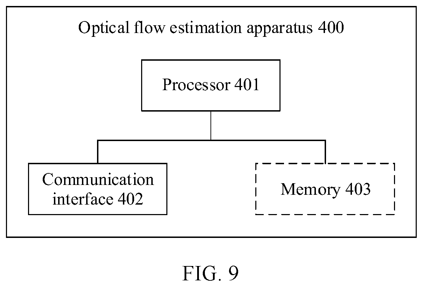

FIG. 9 is a schematic block diagram of an optical flow estimation apparatus 400 according to an embodiment of this application. The optical flow estimation apparatus 400 may include a processor 401 and a communication interface 402. The processor 401 is coupled to the communication interface 402.

The communication interface 402 is configured to input image data to the processor 401, and/or output image data from the processor 401. The processor 401 runs a computer program or instructions, so that the optical flow estimation apparatus 400 implements the optical flow estimation method described in the foregoing embodiment of the method 200.

The processor 401 in this embodiment of this application includes but is not limited to a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA), a discrete gate or transistor logic device, a discrete hardware component, or the like. The general-purpose processor may be a microprocessor, a microcontroller, any conventional processor, or the like.

For example, the processor 401 is configured to: obtain a first image frame and a second image frame through the communication interface 402, where the first image frame and the second image frame are any two adjacent image frames in an image sequence, and the image sequence is obtained by photographing a target scene; obtain a first event frame through the communication interface 402, where the first event frame is used to describe a luminance change of the target scene between the first image frame and the second image frame; and determine a target optical flow based on the first image frame, the second image frame, and the first event frame, where the target optical flow includes at least one of an optical flow of a corresponding pixel between the first image frame and a target moment and an optical flow of a corresponding pixel between the target moment and the second image frame, and the target moment is any moment between the first image frame and the second image frame.

In an optional example, a person skilled in the art may understand that the optical flow estimation apparatus 400 may be specifically the optical flow estimation apparatus in the foregoing embodiment of the optical flow estimation method 200, and the optical flow estimation apparatus 400 may be configured to perform the procedures and/or steps corresponding to the optical flow estimation apparatus in the foregoing embodiment of the optical flow estimation method 200. To avoid repetition, details are not described herein again.

Optionally, the optical flow estimation apparatus 400 may further include a memory 403.

The memory 403 may be a volatile memory or a nonvolatile memory, or may include both a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. By way of example but not limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM), and a direct rambus random access memory (Direct Rambus RAM, DR RAM).

Specifically, the memory 403 is configured to store program code and instructions of the optical flow estimation apparatus. Optionally, the memory 403 is further configured to store data, for example, the first optical flow, the first optical flow allocation mask, and the target optical flow, obtained in a process in which the processor 401 performs the foregoing embodiment of the optical flow estimation method 200.

Optionally, the memory 403 may be an independent device, or may be integrated into the processor 401.

It should be noted that FIG. 9 shows only a simplified design of the optical flow estimation apparatus 400. In actual application, the optical flow estimation apparatus 400 may further include other necessary components, including but not limited to any quantity of communication interfaces, processors, controllers, memories, and the like. All optical flow estimation apparatuses 400 that can implement this application fall within the protection scope of this application.

In a possible design, the optical flow estimation apparatus 400 may be a chip. Optionally, the chip may further include one or more memories, configured to store computer-executable instructions. When the chip apparatus runs, the processor may execute the computer-executable instructions stored in the memory, so that the chip performs the foregoing optical flow estimation method.

Optionally, the chip apparatus may be a field programmable gate array, a dedicated integrated chip, a system chip, a central processing unit, a network processor, a digital signal processing circuit, a microcontroller, a programmable controller, or another integrated chip for implementing related functions.

An embodiment of this application further provides a computer-readable storage medium. The computer-readable storage medium stores computer instructions. When the computer instructions are run on a computer, the optical flow estimation method described in the foregoing method embodiments is implemented.

An embodiment of this application further provides a computer program product. When the computer program product runs on a processor, the optical flow estimation method described in the foregoing method embodiments is implemented.

An embodiment of this application provides a terminal. The terminal includes the foregoing optical flow estimation system. Optionally, the terminal may further include a display. The display is configured to display the target optical flow output by the optical flow estimation system.

The optical flow estimation apparatus, the computer-readable storage medium, the computer program product, the chip, and the terminal provided in embodiments of this application are all configured to perform the corresponding optical flow estimation method provided above. Therefore, for beneficial effect that can be achieved by the optical flow estimation apparatus, the computer-readable storage medium, the computer program product, the chip, and the terminal, refer to beneficial effect of the corresponding optical flow estimation method provided above. Details are not described herein again.

It should be understood that, in embodiments of this application, sequence numbers of the foregoing processes do not mean execution sequences. The execution sequences of the processes should be determined based on functions and internal logic of the processes, and should not constitute any limitation on implementation processes of embodiments of this application.

A person of ordinary skill in the art may be aware that units and algorithm steps described with reference to embodiments disclosed in this specification can be implemented by electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in an actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A computer-implemented optical flow estimation method, comprising:

   obtaining (S201) a first image frame and a second image frame, wherein the first image frame and the second image frame are any two adjacent image frames in an image sequence, and the image sequence is obtained by photographing a target scene;
   obtaining (S202) a first event frame, wherein the first event frame is used to describe a luminance change of the target scene within a time period from the first image frame to the second image frame; and
   determining (S203) a target optical flow based on the first image frame, the second image frame, and the first event frame, wherein the target optical flow is an optical flow from the first image frame to a target moment, and the target moment is any moment between the first image frame and the second image frame,
   wherein before the determining a target optical flow based on the first image frame, the second image frame, and the first event frame, the method further comprises:

      obtaining a second event frame, wherein the second event frame is used to describe a luminance change of the target scene within a time period from the first image frame to the target moment; and

the determining a target optical flow based on the first image frame, the second image frame, and the first event frame comprises:

determining the target optical flow based on the first image frame, the second image frame, the first event frame, and the second event frame, wherein the first image frame, the second image frame, and the first event comprise a same resolution.

2. The method according to claim 1, wherein the determining the target optical flow based on the first image frame, the second image frame, the first event frame, and the second event frame comprises:

determining a first optical flow based on the first image frame, the second image frame, and the first event frame, wherein the first optical flow is an optical flow from the first image frame to the second image frame;

determining a first optical flow allocation mask based on the second event frame, wherein the first optical flow allocation mask indicates a weight of the target optical flow relative to the first optical flow; and

determining the target optical flow based on the first optical flow and the first optical flow allocation mask,

wherein the resolution of the first optical flow allocation mask is the same as that of the second event frame.

3. The method according to claim 2, wherein the determining a first optical flow based on the first image frame, the second image frame, and the first event frame comprises:
inputting the first image frame, the second image frame, and the first event frame to a preset optical flow estimation model, to obtain the first optical flow.

4. The method according to claim 3, wherein the inputting the first image frame, the second image frame, and the first event frame to a preset optical flow estimation model, to obtain the first optical flow comprises:
inputting the first image frame, the second image frame, and the first event frame to the optical flow estimation model, and performing cyclic iteration until a loss function preset in the preset optical flow estimation model for the first optical flow is met, to obtain the first optical flow.

5. The method according to any one of claims 2 to 4, wherein the determining a first optical flow allocation mask based on the second event frame comprises:
inputting the second event frame to a preset optical flow allocation model, to obtain the first optical flow allocation mask.

6. The method according to claim 5, wherein the inputting the second event frame to a preset optical flow allocation model, to obtain the first optical flow allocation mask comprises:
inputting the second event frame to the optical flow allocation model, and performing cyclic iteration until a loss function preset in the preset optical flow estimation model for the first optical flow allocation mask is met, to obtain the first optical flow allocation mask.

7. The method according to any one of claims 1 to 6, wherein the first image frame comprises $H \times W$ pixels, both H and W are integers greater than 1, the first event frame comprises a plurality of channels, and the plurality of channels comprise a first channel, a second channel, a third channel, and a fourth channel;

the first channel comprises $H \times W$ first values, wherein the $H \times W$ first values one-to-one correspond to locations of the $H \times W$ pixels, and the first value indicates a quantity of times that luminance of a pixel at a corresponding location in the first image frame increases within the time period from the first image frame to the second image frame;
the second channel comprises $H \times W$ second values, wherein the $H \times W$ second values one-to-one correspond to the locations of the $H \times W$ pixels, and the second value indicates a quantity of times that luminance of a pixel at a corresponding location in the first image frame decreases within the time period from the first image frame to the second image frame;
the third channel comprises $H \times W$ third values, wherein the $H \times W$ third values one-to-one correspond to the locations of the $H \times W$ pixels, and the third value indicates a timestamp at which luminance of a pixel at a corresponding location in the first image frame increases for the last time within the time period from the first image frame to the second image frame; and
the fourth channel comprises $H \times W$ fourth values, wherein the $H \times W$ fourth values one-to-one correspond to the locations of the $H \times W$ pixels, and the fourth value indicates a timestamp at which luminance of a pixel at a corresponding location in the first image frame decreases for the last time within the time period from the first image frame to the second image frame.

8. The method according to any one of claims 1 to 7, wherein the obtaining a first event frame comprises:

obtaining event flow data, wherein the event flow data comprises event data of each event in at least one event, the at least one event one-to-one corresponds to at least one luminance change that occurs in the target scene between the first image frame and the second image frame, and the data of each event comprises a timestamp, pixel coordinates, and a polarity; and

obtaining the first event frame based on the event flow data.

9. An optical flow estimation apparatus (300), comprising an obtaining module and an optical flow estimation module, wherein

the obtaining module (301) is configured to: obtain (S201) a first image frame and a second image frame, wherein the first image frame and the second image frame are any two adjacent image frames in an image sequence, and the image sequence is obtained by photographing a target scene; and obtain (S202) a first event frame, wherein the first event frame is used to describe a luminance change of the target scene within a time period from the first image frame to the second image frame; and

the optical flow estimation module (302) is configured to determine (S203) a target optical flow based on the first image frame, the second image frame, and the first event frame, wherein the target optical flow is an optical flow from the first image frame to a target moment, and the target moment is any moment between the first image frame and the second image frame,

wherein the obtaining module is further configured to: before the target optical flow is determined based on the first image frame, the second image frame, and the first event frame, obtain a second event frame, wherein the second event frame is used to describe a luminance change of the target scene within a time period from the first image frame to the target moment; and

the optical flow estimation module is specifically configured to determine the target optical flow based on the first image frame, the second image frame, the first event frame, and the second event frame,

wherein the first image frame, the second image frame, and the first event comprise a same resolution.

10. The apparatus according to claim 9, wherein the optical flow estimation module (302) comprises an inter-frame optical flow estimation submodule

(3021), an optical flow allocation submodule (3022), and an inter-frame optical flow estimation submodule at any moment (3023), wherein

the inter-frame optical flow estimation submodule is configured to determine a first optical flow based on the first image frame, the second image frame, and the first event frame, wherein the first optical flow is an optical flow from the first image frame to the second image frame;

the optical flow allocation submodule is configured to determine a first optical flow allocation mask based on the second event frame, wherein the first optical flow allocation mask indicates a weight of the target optical flow relative to the first optical flow; and

the inter-frame optical flow estimation submodule at any moment is configured to determine the target optical flow based on the first optical flow and the first optical flow allocation mask, wherein the resolution of the first optical flow allocation mask is the same as that of the second event frame.

11. The apparatus according to claim 10, wherein the inter-frame optical flow estimation submodule is specifically configured to input the first image frame, the second image frame, and the first event frame to a preset optical flow estimation model, to obtain the first optical flow.

12. A computer-readable storage medium, configured to store a computer program, wherein when the computer program is run by a processor, the method according to any one of claims 1 to 8 is implemented.

**Patentansprüche**

1. Computerimplementiertes Schätzungsverfahren für einen optischen Fluss, umfassend:

Erlangen (S201) eines ersten Bildframes und eines zweiten Bildframes, wobei der erste Bildframe und der zweite Bildframe zwei beliebige benachbarte Bildframes in einer Bildsequenz sind und die Bildsequenz durch Fotografieren einer Zielszene erlangt wird;

Erlangen (S202) eines ersten Ereignisframes, wobei der erste Ereignisframe dazu verwendet wird, eine Luminanzänderung der Zielszene innerhalb eines Zeitraums von dem ersten Bildframe zu dem zweiten Bildframe zu beschreiben; und

Bestimmen (S203) eines optischen Zielflusses basierend auf dem ersten Bildframe, dem zweiten Bildframe und dem ersten Ereignisframe, wobei der optische Zielfluss ein optischer Fluss von dem ersten Bildframe zu einem Zielmoment ist und der Zielmoment ein beliebiger Moment zwischen dem ersten Bildframe und dem zweiten Bildframe ist,

wobei das Verfahren vor dem Bestimmen eines optischen Zielflusses basierend auf dem ersten Bildframe, dem zweiten Bildframe und dem ersten Ereignisframe ferner Folgendes umfasst:

Erlangen eines zweiten Ereignisframes, wobei der zweite Ereignisframe dazu verwendet wird, eine Luminanzänderung der Zielszene innerhalb eines Zeitraums von dem ersten Bildframe zu dem Zielmoment zu beschreiben; und

wobei das Bestimmen eines optischen Zielflusses basierend auf dem ersten Bildframe, dem zweiten Bildframe und dem ersten Ereignisframe Folgendes umfasst:

Bestimmen des optischen Zielflusses basierend auf dem ersten Bildframe, dem zweiten Bildframe, dem ersten Ereignisframe und dem zweiten Ereignisframe,

wobei der erste Bildframe, der zweite Bildframe und der erste Ereignisframe eine gleiche Auflösung umfassen.

2. Verfahren nach Anspruch 1, wobei das Bestimmen des optischen Zielflusses basierend auf dem ersten Bildframe, dem zweiten Bildframe, dem ersten Ereignisframe und dem zweiten Ereignisframe Folgendes umfasst:

Bestimmen eines ersten optischen Flusses basierend auf dem ersten Bildframe, dem zweiten Bildframe und dem ersten Ereignisframe, wobei der erste optische Fluss ein optischer Fluss von dem ersten Bildframe zu dem zweiten Bildframe ist;

Bestimmen einer ersten Zuordnungsmaske für einen optischen Fluss basierend auf dem zweiten Ereignisframe, wobei die erste Zuordnungsmaske für einen optischen Fluss eine Gewichtung des optischen Zielflusses relativ zu dem ersten optischen Fluss anzeigt; und

Bestimmen des optischen Zielflusses basierend auf dem ersten optischen Fluss und der ersten Zuordnungsmaske für einen optischen Fluss, wobei die Auflösung der ersten Zuordnungsmaske für einen optischen Fluss die gleiche wie die des zweiten Ereignisframes ist.

3. Verfahren nach Anspruch 2, wobei das Bestimmen eines ersten optischen Flusses basierend auf dem ersten Bildframe, dem zweiten Bildframe und dem ersten Ereignisframe Folgendes umfasst:

Eingeben des ersten Bildframes, des zweiten Bildframes und des ersten Ereignisframes in ein voreingestelltes Schätzungsmodell für einen optischen Fluss, um den ersten optischen Fluss zu erlangen.

4. Verfahren nach Anspruch 3, wobei das Eingeben des ersten Bildframes, des zweiten Bildframes und des ersten Ereignisframes in ein voreingestelltes Schätzungsmodell für einen optischen Fluss, um den ersten optischen Fluss zu erlangen, Folgendes umfasst:
Eingeben des ersten Bildframes, des zweiten Bildframes und des ersten Ereignisframes in das Schätzungsmodell für einen optischen Fluss und Durchführen einer zyklischen Iteration, bis eine Verlustfunktion, die in dem voreingestellten Schätzungsmodell für einen optischen Fluss für den ersten optischen Fluss voreingestellt ist, erfüllt ist, um den ersten optischen Fluss zu erlangen.

5. Verfahren nach einem der Ansprüche 2 bis 4, wobei das Bestimmen einer ersten Zuordnungsmaske für einen optischen Fluss basierend auf dem zweiten Ereignisframe Folgendes umfasst:
Eingeben des zweiten Ereignisframes in ein voreingestelltes Zuordnungsmodell für einen optischen Fluss, um die erste Zuordnungsmaske für einen optischen Fluss zu erlangen.

6. Verfahren nach Anspruch 5, wobei das Eingeben des zweiten Ereignisframes in ein voreingestelltes Zuordnungsmodell für einen optischen Fluss, um die erste Zuordnungsmaske für einen optischen Fluss zu erlangen, Folgendes umfasst:
Eingeben des zweiten Ereignisframes in das Zuordnungsmodell für einen optischen Fluss und Durchführen einer zyklischen Iteration, bis eine Verlustfunktion, die in dem voreingestellten Schätzungsmodell für einen optischen Fluss für die erste Zuordnungsmaske für einen optischen Fluss voreingestellt ist, erfüllt ist, um die erste Zuordnungsmaske für einen optischen Fluss zu erlangen.

7. Verfahren nach einem der Ansprüche 1 bis 6, wobei der erste Bildframe H × W Pixel umfasst, sowohl H als auch W ganze Zahlen größer als 1 sind, der erste Ereignisframe eine Vielzahl von Kanälen umfasst und die Vielzahl von Kanälen einen ersten Kanal, einen zweiten Kanal, einen dritten Kanal und einen vierten Kanal umfasst;

der erste Kanal H×W erste Werte umfasst, wobei die H×W ersten Werte eins zu eins Positionen der H×W Pixel entsprechen und der erste Wert anzeigt, wie oft die Luminanz eines Pixels an einer entsprechenden Position in dem ersten Bildframe innerhalb des Zeitraums von dem ersten Bildframe zu dem zweiten Bildframe zunimmt;

der zweite Kanal H×W zweite Werte umfasst, wobei die H×W zweiten Werte eins zu eins den Positionen der H×W Pixel entsprechen und der zweite Wert anzeigt, wie oft die Luminanz eines Pixels an einer entsprechenden Position in dem ersten Bildframe innerhalb des Zeitraums von dem ersten Bildframe zu dem zweiten Bildframe abnimmt;

der dritte Kanal H×W dritte Werte umfasst, wobei die H×W dritten Werte eins zu eins Positionen der H×W Pixel entsprechen und der dritte Wert einen Zeitstempel anzeigt, bei dem eine Luminanz eines Pixels an einer entsprechenden Position in dem ersten Bildframe innerhalb des Zeitraums von dem ersten Bildframe zu dem zweiten Bildframe zum letzten Mal zunimmt; und

der vierte Kanal H×W vierte Werte umfasst, wobei die H×W vierten Werte eins zu eins den Positionen der H×W Pixel entsprechen und der vierte Wert einen Zeitstempel anzeigt, bei dem eine Luminanz eines Pixels an einer entsprechenden Position in dem ersten Bildframe innerhalb des Zeitraums von dem ersten Bildframe zu dem zweiten Bildframe zum letzten Mal abnimmt.

8. Verfahren nach einem der Ansprüche 1 bis 7, wobei das Erlangen eines ersten Bildframes Folgendes umfasst:

Erlangen von Ereignisflussdaten, wobei die Ereignisflussdaten Ereignisdaten jedes Ereignisses in mindestens einem Ereignis umfassen, das mindestens eine Ereignis eins zu eins mindestens einer Luminanzänderung entspricht, die in der Zielszene zwischen dem ersten Bildframe und dem zweiten Bildframe auftritt, und die Daten jedes Ereignisses einen Zeitstempel, Pixelkoordinaten und eine Polarität umfassen; und

Erlangen des ersten Ereignisframes basierend auf den Ereignisflussdaten.

9. Schätzungsvorrichtung für einen optischen Fluss (300), umfassend ein Erlangungsmodul und ein Schätzungsmodul für einen optischen Fluss, wobei

das Erlangungsmodul (301) zu Folgendem konfiguriert ist: Erlangen (S201) eines ersten Bildframes und eines zweiten Bildframes, wobei der erste Bildframe und der zweite Bildframe zwei beliebige benachbarte Bildframes in einer Bildsequenz sind und die Bildsequenz durch Fotografieren einer Zielszene erlangt wird; und Erlangen (S202) eines ersten Ereignisframes, wobei der erste Ereignisframe verwendet wird, um eine Luminanzänderung der Zielszene innerhalb eines Zeitraums von dem ersten Bildframe zu dem zweiten Bildframe zu beschreiben; und

das Schätzungsmodul für einen optischen Fluss (302) dazu konfiguriert ist, einen optischen Zielfluss basierend auf dem ersten Bildframe, dem zweiten Bildframe und dem ersten Ereignisframe zu bestimmen (S203), wobei der optische Zielfluss ein optischer Fluss von dem ersten Bildframe zu einem Zielmoment ist und der Zielmoment ein beliebiger Moment zwischen dem ersten Bildframe und dem zweiten Bildframe ist, wobei das Erlangungsmodul ferner zu Folgendem konfiguriert ist: bevor der optische Zielfluss basierend auf dem ersten Bildframe, dem zweiten Bildframe und dem ersten Ereignisframe bestimmt wird, Erlangen eines zweiten Ereignisframes, wobei der zweite Ereignisframe dazu verwendet wird, eine Luminanzänderung der Zielszene innerhalb eines Zeitraums von dem ersten Bildframe zu dem Zielmoment zu beschreiben; und

das Schätzungsmodul für einen optischen Fluss insbesondere dazu konfiguriert ist, den optischen Zielfluss basierend auf dem ersten Bildframe, dem zweiten Bildframe, dem ersten Ereignisframe und dem zweiten Ereignisframe zu bestimmen,

wobei der erste Bildframe, der zweite Bildframe und der erste Ereignisframe eine gleiche Auflösung umfassen.

10. Vorrichtung nach Anspruch 9, wobei das Schätzungsmodul für einen optischen Fluss (302) ein Teilmodul (3021) zur Schätzung eines optischen Flusses zwischen Frames, ein Teilmodul (3022) zur Zuordnung eines optischen Flusses und ein Teilmodul zur Schätzung eines optischen Flusses zwischen Frames zu einem beliebigen Moment umfasst (3023), wobei

das Teilmodul zur Schätzung eines optischen Flusses zwischen Frames dazu konfiguriert ist, einen ersten optischen Fluss basierend auf dem ersten Bildframe, dem zweiten Bildframe und dem ersten Ereignisframe zu bestimmen, wobei der erste optische Fluss ein optischer Fluss von dem ersten Bildframe zu dem zweiten Bildframe ist;

das Teilmodul zur Zuordnung eines optischen Flusses dazu konfiguriert ist, eine erste Zuordnungsmaske für einen optischen Fluss basierend auf dem zweiten Ereignisframe zu bestimmen, wobei die erste Zuordnungsmaske für einen optischen Fluss eine Gewichtung des optischen Zielflusses relativ zu dem ersten optischen Fluss anzeigt; und

das Teilmodul zur Schätzung eines optischen Flusses zwischen Frames zu einem beliebigen Moment dazu konfiguriert ist, den optischen Zielfluss basierend auf dem ersten optischen Fluss und der ersten Zuordnungsmaske für einen optischen Fluss zu bestimmen,

wobei die Auflösung der ersten Zuordnungsmaske für einen optischen Fluss die gleiche wie die des zweiten Ereignisframes ist.

**11.** Vorrichtung nach Anspruch 10, wobei das Teilmodul zur Schätzung eines optischen Flusses zwischen Frames insbesondere dazu konfiguriert ist, den ersten Bildframe, den zweiten Bildframe und den ersten Ereignisframe in ein voreingestelltes Schätzungsmodell für einen optischen Fluss einzugeben, um den ersten optischen Fluss zu erlangen.

**12.** Computerlesbares Speichermedium, das dazu konfiguriert ist, ein Computerprogramm zu speichern, wobei, wenn das Computerprogramm durch einen Prozessor ausgeführt wird, das Verfahren nach einem der Ansprüche 1 bis 8 implementiert wird.

**Revendications**

**1.** Procédé d'estimation de flux optique mis en œuvre par ordinateur, comprenant :

l'obtention (S201) d'une première trame d'image et d'une seconde trame d'image, dans lequel la première trame d'image et la seconde trame d'image sont deux trames d'image adjacentes quelconques dans une séquence d'images, et la séquence d'images est obtenue en photographiant une scène cible ;

l'obtention (S202) d'une première trame d'événement, dans lequel la première trame d'événement est utilisée pour décrire un changement de luminance de la scène cible dans une période allant de la première trame d'image à la seconde trame d'image ; et

la détermination (S203) d'un flux optique cible sur la base de la première trame d'image, de la seconde trame d'image, et de la première trame d'événement, dans lequel le flux optique cible est un flux optique allant de la première trame d'image à un moment cible, et le moment cible est n'importe quel moment entre la première trame d'image et la seconde trame d'image,

dans lequel, avant la détermination d'un flux optique cible sur la base de la première trame d'image, de la seconde trame d'image, et de la première trame d'événement, le procédé comprend également :

l'obtention d'une seconde trame d'événement, dans lequel la seconde trame d'événement est utilisée pour décrire un changement de luminance de la scène cible dans une période allant de la première trame d'image au moment cible ; et

la détermination d'un flux optique cible sur la base de la première trame d'image, de la seconde trame d'image, et de la première trame d'événement comprend également :

la détermination du flux optique cible sur la base de la première trame d'image, de la seconde trame d'image, de la première trame d'événement, et de la seconde trame d'événement, dans lequel la première trame d'image, la seconde trame d'image, et le premier événement comprennent une même résolution.

**2.** Procédé selon la revendication 1, dans lequel la détermination du flux optique cible sur la base de la première trame d'image, de la seconde trame d'image, de la première trame d'événement, et de la seconde trame d'événement comprend :

la détermination d'un premier flux optique sur la base de la première trame d'image, de la seconde trame d'image, et de la première trame d'événement, dans lequel le premier flux optique est un flux optique allant de la première trame d'image à la seconde trame d'image ;

la détermination d'un premier masque d'allocation de flux optique sur la base de la seconde trame d'événement, dans lequel le premier masque d'allocation de flux optique indique un poids du flux optique cible par rapport au premier flux optique ; et

la détermination du flux optique cible sur la base du premier flux optique et du premier masque d'allocation de flux optique, dans lequel la résolution du premier masque d'allocation de flux optique est la même que celle de la seconde trame d'événement.

**3.** Procédé selon la revendication 2, dans lequel la détermination d'un premier flux optique sur la base de la première trame d'image, de la seconde trame d'image, et de la première trame d'événement comprend :
l'introduction de la première trame d'image, de la seconde trame d'image, et de la première trame d'événement dans un modèle d'estimation de flux optique prédéfini, pour obtenir le premier flux optique.

**4.** Procédé selon la revendication 3, dans lequel l'introduction de la première trame d'image, de la seconde trame d'image, et de la première trame d'événement dans un modèle d'estimation de flux optique prédéfini, pour obtenir le premier flux optique, comprend :

l'introduction de la première trame d'image, de la seconde trame d'image, et de la première trame d'événement dans le modèle d'estimation de flux optique, et la réalisation d'une itération cyclique jusqu'à ce qu'une fonction de perte prédéfinie dans le modèle d'estimation de flux optique prédéfini pour le premier flux optique soit satisfaite, pour obtenir le premier flux optique.

5. Procédé selon l'une quelconque des revendications 2 à 4, dans lequel la détermination d'un premier masque d'allocation de flux optique sur la base de la seconde trame d'événement comprend : l'introduction de la seconde trame d'événement dans un modèle d'allocation de flux optique prédéfini, pour obtenir le premier masque d'allocation de flux optique.

6. Procédé selon la revendication 5, dans lequel l'introduction de la seconde trame d'événement dans un modèle d'allocation de flux optique prédéfini, pour obtenir le premier masque d'allocation de flux optique, comprend :

l'introduction de la seconde trame d'événement dans le modèle d'allocation de flux optique, et la réalisation d'une itération cyclique jusqu'à ce qu'une fonction de perte prédéfinie dans le modèle d'estimation de flux optique prédéfini pour le premier masque d'allocation de flux optique soit satisfaite, pour obtenir le premier masque d'allocation de flux optique.

7. Procédé selon l'une quelconque des revendications 1 à 6, dans lequel la première trame d'image comprend H×W pixels, H et W sont tous deux des entiers supérieurs à 1, la première trame d'événement comprend une pluralité de canaux, et la pluralité de canaux comprennent un premier canal, un deuxième canal, un troisième canal, et un quatrième canal ;

le premier canal comprend H×W premières valeurs, dans lequel les H×W premières valeurs correspondent une à une aux emplacements des H×W pixels, et la première valeur indique une quantité de fois que la luminance d'un pixel à un emplacement correspondant dans la première trame d'image augmente dans la période allant de la première trame d'image à la seconde trame d'image ;
le deuxième canal comprend H×W deuxièmes valeurs, dans lequel les H×W deuxièmes valeurs correspondent une à une aux emplacements des H×W pixels, et la deuxième valeur indique une quantité de fois que la luminance d'un pixel à un emplacement correspondant dans la première trame d'image diminue dans la période allant de la première trame d'image à la seconde trame d'image ;
le troisième canal comprend H×W troisièmes valeurs, dans lequel les H×W troisièmes valeurs correspondent une à une aux emplacements des H×W pixels, et la troisième valeur indique un horodatage auquel la luminance d'un pixel à un emplacement correspondant dans la première trame d'image augmente pour la dernière fois dans la période allant de la première trame d'image à la seconde trame d'image ; et
le quatrième canal comprend H×W quatrièmes valeurs, dans lequel les H×W quatrièmes valeurs correspondent une à une aux emplacements des H×W pixels, et la quatrième valeur indique un horodatage auquel la luminance d'un pixel à un emplacement correspondant dans la première trame d'image diminue pour la dernière fois dans la période allant de la première trame d'image à la seconde trame d'image.

8. Procédé selon l'une quelconque des revendications 1 à 7, dans lequel l'obtention d'une première trame d'évènement comprend :

l'obtention de données de flux d'événements, dans lequel les données de flux d'événements comprennent des données d'événement de chaque événement dans au moins un événement, l'au moins un événement correspond un à un à au moins un changement de luminance qui se produit dans la scène cible entre la première trame d'image et la seconde trame d'image, et les données de chaque événement comprennent un horodatage, des coordonnées de pixels, et une polarité ; et
l'obtention de la première trame d'événement sur la base des données de flux d'événements.

9. Appareil d'estimation de flux optique (300), comprenant un module d'obtention et un module d'estimation de flux optique, dans lequel

le module d'obtention (301) est configuré pour : obtenir (S201) une première trame d'image et une seconde trame d'image, dans lequel la première trame d'image et la seconde trame d'image sont deux trames d'image adjacentes quelconques dans une séquence d'images, et la séquence d'images est obtenue en photographiant une scène cible ; et obtenir (S202) une première trame d'événement, dans lequel la première trame d'événement est utilisée pour décrire un changement de luminance de la scène cible dans une période allant de la première trame d'image à la seconde trame d'image ; et

le module d'estimation de flux optique (302) est configuré pour déterminer (S203) un flux optique cible sur la base de la première trame d'image, de la seconde trame d'image, et de la première trame d'événement, dans lequel le flux optique cible est un flux optique allant de la première trame d'image à un moment cible, et le moment cible est n'importe quel moment entre la première trame d'image et la seconde trame d'image,

dans lequel le module d'obtention est également configuré pour : avant que le flux optique cible ne soit déterminé sur la base de la première trame d'image, de la seconde trame d'image, et de la première trame d'événement, obtenir une seconde trame d'événement, dans lequel la seconde trame d'événement est utilisée pour décrire un changement de luminance de la scène cible dans une période allant de la première trame d'image au moment cible ; et le module d'estimation de flux optique est spécifiquement configuré pour déterminer le flux optique cible sur la base de la première trame d'image, de la seconde trame d'image, de la première trame d'événement, et de la seconde trame d'événement, dans lequel la première trame d'image, la seconde trame d'image, et le premier événement comprennent une même résolution.

10. Appareil selon la revendication 9, dans lequel le module d'estimation de flux optique (302) comprend un sous-module d'estimation de flux optique inter-trame (3021), un sous-module d'allocation de flux optique (3022), et un sous-module d'estimation de flux optique inter-trame à tout moment (3023), dans lequel

le sous-module d'estimation de flux optique inter-trame est configuré pour déterminer un premier flux optique sur la base de la première trame d'image, de la seconde trame d'image, et de la première trame d'événement, dans lequel le premier flux optique est un flux optique allant de la première trame d'image à la seconde trame d'image ;
le sous-module d'allocation de flux optique est configuré pour déterminer un premier masque d'allocation de flux optique sur la base de la seconde trame d'événement, dans lequel le premier masque d'allocation de flux optique indique un poids du flux optique cible par rapport au premier flux optique ; et
le sous-module d'estimation de flux optique inter-trame est configuré à tout moment pour déterminer le flux optique cible sur la base du premier flux optique et du premier masque d'allocation de flux optique,

dans lequel la résolution du premier masque d'allocation de flux optique est la même que celle de la seconde trame d'événement.

11. Appareil selon la revendication 10, dans lequel le sous-module d'estimation de flux optique inter-trame est spécifiquement configuré pour introduire la première trame d'image, la seconde trame d'image, et la première trame d'événement dans un modèle d'estimation de flux optique prédéfini, pour obtenir le premier flux optique.

12. Support de stockage lisible par ordinateur, configuré pour stocker un programme informatique, dans lequel lorsque le programme est exécuté par un processeur, le procédé selon l'une quelconque des revendications 1 à 8 est mis en œuvre.

| Timestamp | x | y | Polarity |
|---|---|---|---|
| 1596162799150829 | 291 | 29 | 0 |
| 1596162799150839 | 212 | 80 | 0 |
| 1596162799150841 | 261 | 211 | 1 |
| 1596162799150851 | 84 | 62 | 0 |
| 1596162799150860 | 260 | 203 | 1 |
| 1596162799150862 | 264 | 171 | 1 |
| 1596162799150863 | 262 | 187 | 1 |
| 1596162799150868 | 266 | 99 | 1 |
| 1596162799150869 | 266 | 100 | 1 |
| 1596162799150870 | 265 | 130 | 1 |
| 1596162799150871 | 186 | 10 | 0 |
| 1596162799150871 | 266 | 127 | 1 |
| 1596162799150882 | 266 | 114 | 1 |
| 1596162799150897 | 215 | 18 | 0 |
| 1596162799150902 | 296 | 108 | 0 |
| 1596162799150908 | 267 | 122 | 1 |

(a)

(b)

FIG. 1

EP 4 407 557 B1

(a)                        (b)

FIG. 2

FIG. 3

200

| Obtain a first image frame and a second image frame, where the first image frame and the second image frame are any two adjacent image frames in an image sequence, and the image sequence is obtained by photographing a target scenario | S201 |

| Obtain a first event frame, where the first event frame is used to describe a luminance change status of the target scenario within a time period from the first image frame to the second image frame | S202 |

| Determine a target optical flow based on the first image frame, the second image frame, and the first event frame, where the target optical flow is an optical flow from the first image frame to a target moment, and the target moment is any moment between the first image frame and the second image frame | S203 |

FIG. 4

Event flow data

|  | Timestamp | x-coordinate | y-coordinate | Polarity |
|---|---|---|---|---|
| Event 1 | t2 | 1 | 1 | 1 |
| Event 2 | t2 | 1 | 2 | 1 |
| Event 3 | t2 | 2 | 2 | 0 |
| Event 4 | t2 | 4 | 4 | 0 |
| Event 5 | t3 | 3 | 3 | 1 |
| Event 6 | t3 | 2 | 2 | 0 |
| Event 7 | t3 | 3 | 2 | 1 |
| Event 8 | t4 | 4 | 2 | 1 |
| Event 9 | t4 | 3 | 3 | 1 |
| Event 10 | t4 | 2 | 2 | 0 |
| Event 11 | t4 | 2 | 4 | 1 |
| Event 12 | t5 | 2 | 2 | 0 |
| Event 13 | t6 | 2 | 2 | 0 |
| Event 14 | t6 | 3 | 1 | 1 |
| Event 15 | t7 | 4 | 2 | 1 |
| Event 16 | t7 | 3 | 3 | 0 |
| Event 17 | t8 | 4 | 1 | 1 |
| Event 18 | t9 | 2 | 4 | 0 |
| Event 19 | t9 | 1 | 4 | 0 |
| Event 20 | t9 | 1 | 1 | 1 |

FIG. 5

First event frame

| 2 | 1 | 0 | 0 |
|---|---|---|---|
| 0 | **0** | 0 | 1 |
| 1 | 1 | 2 | 0 |
| 1 | 2 | 0 | 0 |

First channel

| 0 | 0 | 0 | 1 |
|---|---|---|---|
| 0 | **5** | 0 | 1 |
| 0 | 0 | 1 | 0 |
| 0 | 0 | 0 | 1 |

Second channel

| t9 | t2 | 0 | 0 |
|---|---|---|---|
| 0 | **0** | 0 | t4 |
| t4 | t3 | t4 | 0 |
| t8 | t7 | 0 | 0 |

Third channel

| 0 | 0 | 0 | t9 |
|---|---|---|---|
| 0 | **t6** | 0 | t9 |
| 0 | 0 | t7 | 0 |
| 0 | 0 | 0 | t2 |

Fourth channel

FIG. 6

Optical flow estimation module 300

Obtaining module 301

Inter-frame optical flow estimation submodule 3021

Optical flow allocation submodule 3022

Inter-frame optical flow estimation submodule at any moment 3023

Optical flow estimation module 302

FIG. 7

FIG. 8

Optical flow estimation apparatus 400

Processor 401

Communication interface 402

Memory 403

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109922372 A

- US 2020265590 A1